# EUROPEAN PATENT APPLICATION

(11) **EP 3 375 768 A1**
(43) Date of publication of application: **19.09.2018**
(21) Application number: 18162418.0
(22) Date of filing: 16.03.2018
(51) Int. Cl.: C05F 17/02, B65F 1/00, B65F 1/12, B65F 1/06

(54) **COMPOSTER APPARATUS, METHOD OF MAKING AND METHOD OF USING THE SAME**

(30) Priority: 17.03.2017 US 201762472780 P
(71) Applicant: Polder Products, LLC, Oxford, CT 06478 (US)
(72) Inventor: PARCELLS,, William, Princeton, NJ New Jersey 08540 (US); MIDORIKAWA-HAELTERS,, Yuka, Langhorne, PA Pennsylvania 19047 (US); VAN VARICK,, Robert, Yardley, PA Pennsylvania 19067 (US); STRUM,, Donald, Princeton, NJ New Jersey 08540 (US)
(74) Representative: Potter Clarkson LLP

(57) **Abstract**

An apparatus as a countertop composter includes a container, a frame, a lid with holes that can be adjustably opened and closed. The container has a bottom wall, a side wall, an open top and a top edge defined by the side wall. The frame is configured to be coupled to and support the container. The container may be made of a resilient material. When the container is inverted, a force is applied onto the bottom of the container to remove the organic waste inside the container.

## Description

### PRIORITY CLAIM AND CROSS-REFERENCE

This application claims the benefit of U.S. Provisional Application No. 62/472,780, filed March 17, 2017, which application is expressly incorporated by reference herein in its entirety.

### FIELD OF THE INVENTION

The disclosure relates to home accessories generally. More particularly, the disclosed subject matter relates to a composter apparatus or a countertop temporary storage device for organic waste, the method of making and the method using the same.

### BACKGROUND

Tremendous organic waste is generated in household kitchens every day. Organic waste is mostly dumped as trash and eventually end in landfills. Therefore, organic waste management is very important.

Some methods and devices are used to divert organic waste from landfills. Such devices include under-sink waste disposers and garbage compacters. Disposers provide an immediate means to remove garbage from the sink area, but the disposers waste a large amount of water, which burdens sewage systems, and use energy to operate. Garbage compacters reduce the volume of garbage by crushing garbage and storing them in a plastic bag. However, the total mass of garbage remains unchanged.

Some other methods include home composting outside of houses, and municipal collection and composting. For home composting, homeowners may maintain a composting container or device in yard. The homeowners put their daily organic waste into the composting container or device. The collected organic waste will decompose and turn into compost, which can be used as fertilizer for gardens.

### SUMMARY OF THE INVENTION

The present disclosure provides an apparatus as a countertop composter or a temporary storage device used in a kitchen for collecting, storing and/or composting organic wastes.

In some embodiments, such an apparatus includes a container, a frame, and a lid. The container has a bottom wall, a side wall, an open top and a top edge (or rim) of a predetermined size defined by the side wall. The frame is configured to be coupled to and support the container. The container is removably coupled to the frame. The lid defines one or more holes that can be adjustably opened and closed. In some embodiments, the apparatus further comprises a knob coupled with the lid, and the knob is configured to rotate, and adjustably open and close the one or more holes on the lid. The knob may comprise or be made of a material of metal, plastics or any combination thereof. The lid may also comprises an edge shaped and sized to be interlocked with the top edge of the container. The container comprises or is made of a resilient material. When the container is inverted, the container is still held onto the frame. A force can be applied onto the bottom of the container and discard organic wastes stored inside the container.

In some embodiments, the container further comprises an outwardly extending rib. The rib may be made of the same or different material for the container. In some embodiments, the rib has higher rigidity and hardness compared to the main body of the container. The apparatus further comprises a frame clip configured to be coupled with the outwardly extending rib and the frame so as to hold the container to the frame.

In some embodiments, the container further comprises a tab attached to an outside surface of the bottom wall. The tab is shaped and sized to be applied to a force and translate to the container so as to push the container inward and pull the container outward.

The lid with one or more holes can be in different configurations. For example, the lid may be a single lid that defines a plurality of holes. A cover with one or more holes may also be pivotally mounted onto the lid.

In some embodiments, the lid comprises two portions: the first lid portion and the second lid portion. The first lid portion has at least one venting region defining a plurality of holes. The second lid portion defines at least one opening. The first lid portion is configured to be disposed on the second lid portion. The second lid is configured to be disposed on the top edge of the container to cover the container. The first lid portion is configured to be movable relative to the second lid portion from a sealed or closed configuration to a venting or open configuration. The at least one venting region and the at least one opening are at least partially overlaps in the venting configuration.

In some embodiments, the knob is on the first lid portion. The knob is shaped and configured to move the first lid portion relative to the second lid portion so as to form a sealed configuration or a venting configuration. The knob and the first lid portion may be in a unitary structure molded in one step. Alternatively, the knob may be made separately and then attached with the first lid portion through any suitable means such as screws. In some embodiments, the knob is coupled with a center of the first lid portion, and is hollow facing inward. The second lid portion has an upward pin shaped and sized to be inserted into the knob.

The container may be in any suitable shape. For example, the container may be a bucket substantially in a shape of a cylinder or a frustum of cone. The lid including the portions such as the first lid portion and the second lid portion are substantially circular. In some embodiments, the first lid portion may have a size equal to or smaller than the predetermined size. The second lid portion may also have a size equal to or smaller than the predetermined size. In some embodiments, the first lid portion is smaller than the second lid, and is shaped to have a bottom surface substantially matching with a top surface of the second lid portion. The second lid portion may comprise an edge shaped and sized to be interlocked with the top edge of the container in some embodiments.

The hole defined by the lid can be in any suitable configuration. For example, the at least one venting region of the first lid portion can be in any suitable configuration to provide a plurality of holes or apertures through the first lid portion. For example, the at least one venting region of the first lid portion may comprise a mesh structure, a grid structure, a net structure, or the like or any combination thereof. The at least one venting regions may be arranged in a pattern. In some embodiments, the first lid portion comprises six venting regions radially distributed throughout the first lid, and the second lid portion defines six openings radially distributed throughout the second lid accordingly.

The knob, the first lid portion, and the second lid portion may be made of a plastic or reinforced elastomer. The frame may be made of a metal, a plastics or a combination thereof. The container is made of an elastomer, which is optionally reinforced. For example, the container may be made of a hydrophobic elastomer having a shore A hardness in the range from 20 to 90. In some embodiments, the container is made of a silicone.

In another aspect, the present disclosure provides a method of making the apparatus as described. Such a method comprises the steps of providing the container, the frame, the lid (for example, the first lid portion and the second lid portion), and assembling them to form the apparatus. The container including the outwardly extending rib and the bottom tab may be molded from a same material such as an elastomer or different materials, as described. The lid, the first or the second lid may be molded from a plastics or reinforced elastomer. The knob and the first lid portion may be in a unitary structure molded in one step. Alternatively, the knob may be made separately and then attached with the first lid portion through any suitable means such as screws. The pin and the second lid portion may be in a unitary structure molded in one step.

In the assembling step, the container is coupled onto the frame, for example, by pushing the frame clip inward and coupling with the frame. The lid such as the second lid portion is placed onto the top edge of the container so as to cover the container. The lid (e.g., the second lid portion) may have an edge to engage or interlock with an edge of the container. The first lid portion is placed onto the second lid portion in some embodiments.

In another aspect, the present disclosure also provides a method of using the apparatus as described. The apparatus is placed on a countertop in a kitchen. In such a method, the lid, for example, the first and the second lid portions, are removed from the container, organic waste can be placed into the container. In some embodiments, the first lid portion is moved relative to the second lid portion to one of the sealed configuration and the venting configuration so as to adjust air flow into the container. The air flow can be increased, decreases or completely shut off. It is preferable that air may get into the container for compositing, but no odor of decayed organic waste comes out of the container. In some embodiments, the first lid portion comprises a knob. The first lid portion is moved relative to the second lid by applying a force to the knob to rotate the first lid portion.

The method of using may further comprise removing the lid or lid portions from the container, inverting the container with the open top at least partially facing down, and pushing the container so as to remove the organic waste out of the container. In some embodiments, the container comprises a tab on an outside surface of the bottom wall. A force is applied onto the tab to translate the container inward to remove the organic waste inside. The organic waste can be directly dumped to a big outdoor composter. The tab is pulled outward and the container return back to an original shape. The container can be washed or rinsed with water under a faucet or with water from a garden hose, and/or washed in a dishwasher.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIG. 1 illustrates a perspective view of an exemplary apparatus in accordance with some embodiments.
FIG. 2A is an exploded view of the apparatus of FIG. 1.
FIG. 2B is a cross-sectional view of the apparatus of FIG. 1 and FIG. 2A.
FIG. 3 is a side view of the apparatus of FIG. 1.
FIG. 4 illustrates an exemplary first lid portion (or the top lid portion) having at least one venting region (e.g., mesh region).
FIG. 5 illustrates an exemplary second lid portion (or the bottom lid portion) having at least one opening.
FIG. 6 is a top-down view of the first and the second lid portions illustrating an exemplary sealed or closed configuration
FIG. 7 illustrates the lids of FIG. 6 in a half (50%) open configuration.
FIG. 8 illustrates the lids of FIG. 6 in a full open configuration.
FIG. 9 is a perspective view of the second and the first lid portions from the bottom of the second lid portion.
FIG. 10 is a side view of an exemplary apparatus in an inverted position.
FIG. 11 is a side view of the exemplary apparatus of FIG. 10 in an inverted position, which is pushed inward.
FIG. 12 is a side view of the exemplary apparatus of FIG. 10 in an inverted position, which is pushed inside out.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For purposes of the description hereinafter, it is to be understood that the embodiments described below may assume alternative variations and embodiments. It is also to be understood that the specific articles, compositions, and/or processes described herein are exemplary and should not be considered as limiting.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

The present disclosure provides an apparatus, a method of making and a method of using the apparatus. The apparatus can be used as a countertop composter or a temporary storage device in a kitchen for collecting, storing and/or composting organic wastes.

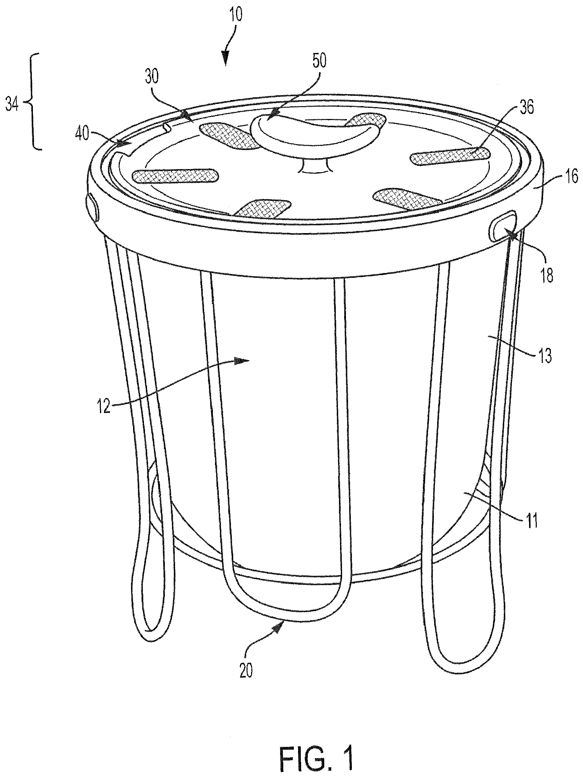

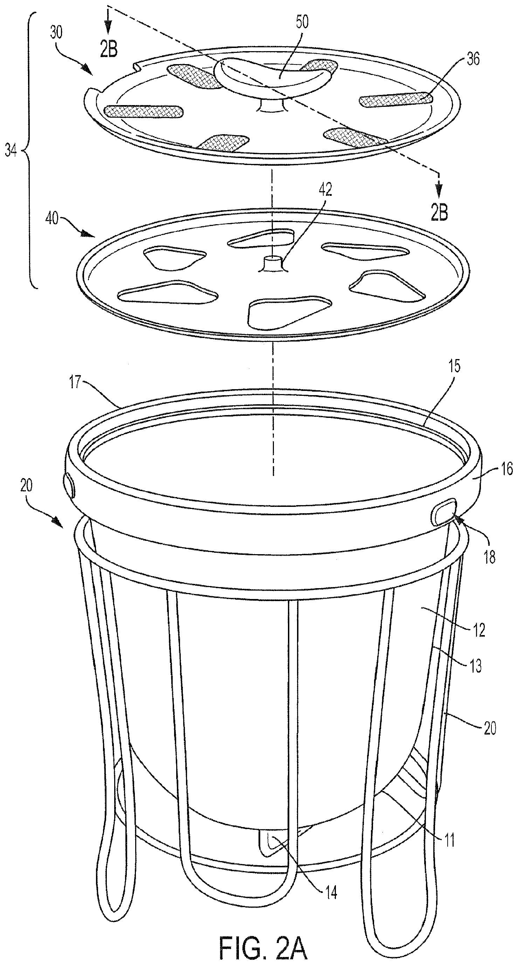

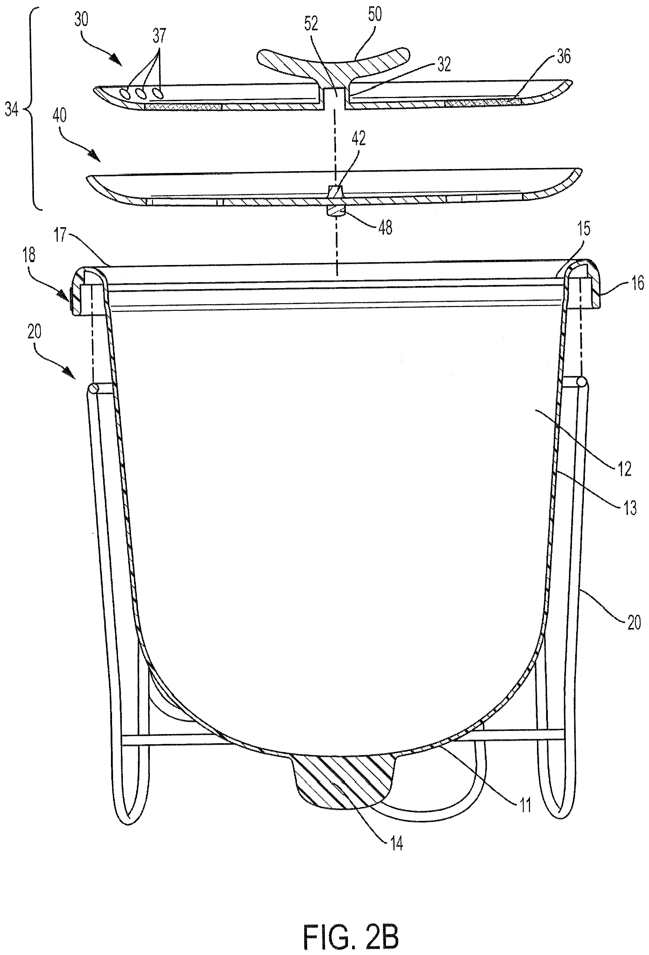

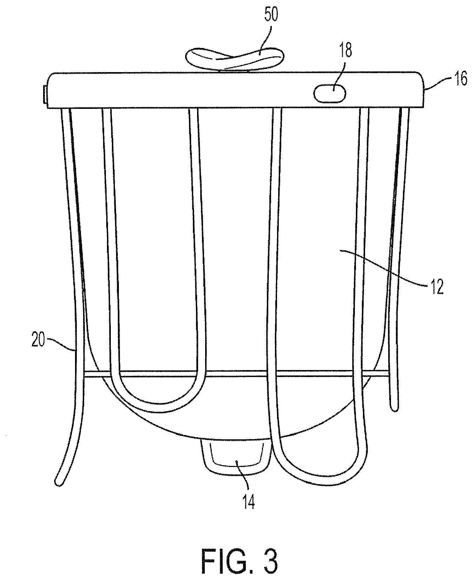

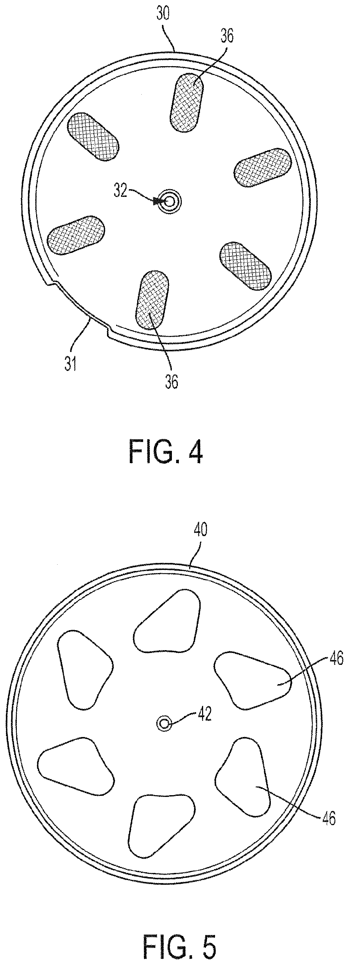

Referring to FIGS. 1-5, an exemplary apparatus 10 is used as a countertop composter for collecting and storing organic waste. Apparatus 10 includes a container 12, a frame 20, and a lid 34 including a first lid portion 30 and a second lid portion 40. The container 12 has a bottom wall 11, a side wall 13, an open top 15 and a top edge (or rim) 17 of a predetermined size extending inwardly from the side wall 13. The frame 20 is configured to be removeably coupled to and support the container 12. The first lid portion 30 has at least one venting region 36 defining a one or more holes (FIG. 4). The second lid portion 40 defines at least one opening 46 (FIG. 5). The first lid portion 30 is configured to be disposed on the second lid portion 40 in pivoting relation. The second lid 40 is configured to be disposed on the top edge 17 of the container 12 to cover the container 12. Referring to FIGS. 1 and 2, the top edge 17 is an inward top edge for receiving the second lid 40. In some embodiments, the first lid portion may define a concave portion or depression 31 as illustrated in FIG. 4.

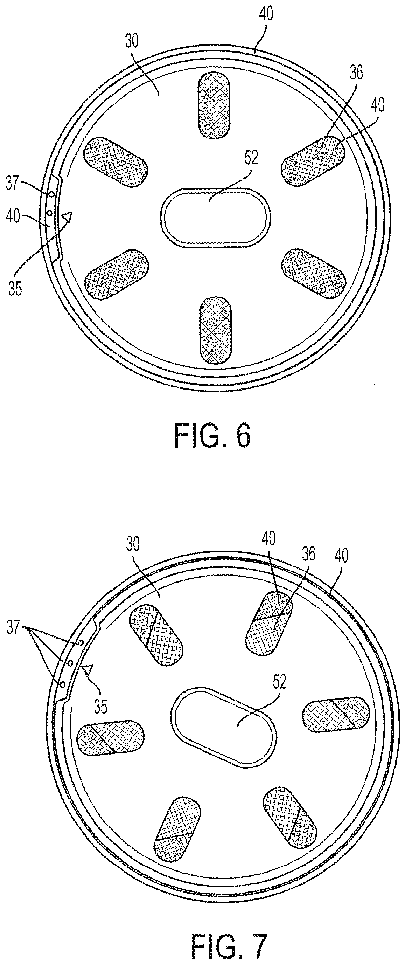

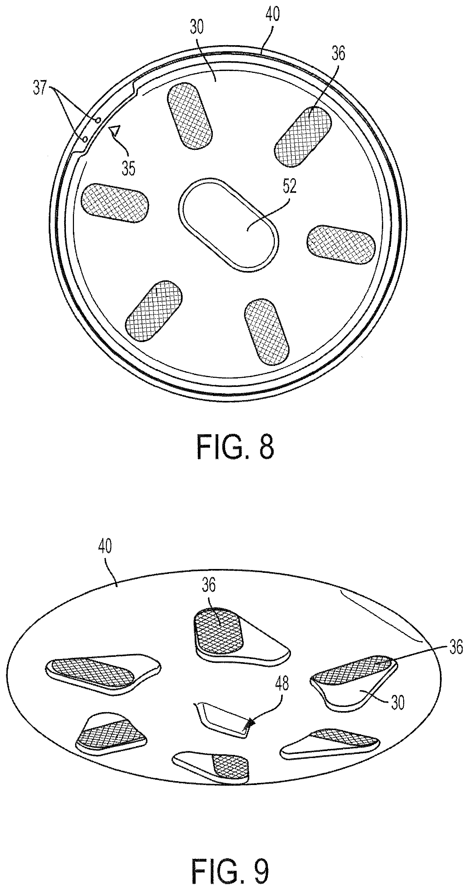

Referring to FIGS. 6-8, the first lid portion (or the top lid portion) 30 is configured to be movable relative to the second lid portion (or the bottom lid portion) 40 from a sealed or closed configuration (FIG. 6) to a venting or open configuration (FIGS. 7-8). The open and closed configurations are based on alignments observed vertically or in a direction normal to a top surface of the first lid portion 30. In the closed configuration (FIG. 6), all the venting region 36 of the first lid portion 30 overlap with the second lip portion 40, without overlap with the at least one opening 46. The solid base of the second lip portion 40 blocks the venting region 36 of the first lid portion 30. The at least one venting region 36 of the first lid portion 30 and the at least one opening 46 of the second lid portion 40 are at least partially overlaps in the venting configuration. FIG. 7 illustrates a half (e.g., 50%) open configuration. FIG. 8 illustrates a full open configuration. In the full open configuration, the at least one venting region 36 is fully aligned and overlaps with portions of the at least one opening 46. FIGS. 6-8 are for illustration only. The shaded areas are used to illustrate the overlap between the venting region 36 and the second lid portion 40. The material of the second lid portion 40 inside the shaded areas are the same as the material in other portions of the second lid portion 40.

The first and the second lid portions 30, 40 can be adjusted to form any configuration between a closed configuration to an open configuration as shown in FIG. 8. FIG. 9 is a perspective view of the underside of the second lid 40. The first lid 30 with venting regions 36 may be seen depending on the configuration. In some embodiments, aperture indicators 35, 37 may be debossed into the lid portions. For example, as shown in FIGS. 6-8, the first lid potion 30 may include a pointing indicator 35. The second lid portion 40 may contains three position indicators 37. When the pointing indicator 35 points to each position of the three position indicators 37, the lids 30 and 40 are in each of the configurations including closed (FIG. 6), partial open (FIG. 7) and full open (FIG. 8) configurations. The pointing indicator 35 may be positioned toward an area between two position indicators 37. In some embodiments, the indicator 35 may be proximate to the concaved portion or depression 31 of the first lid portion 30 so that the indicators are easily seen. The second lid portion 40 is also configured to be movable relative to the first lid portion 30. In some embodiments, the rotation angle is limited to a predetermined minimum to a predetermined maximum angle.

In some embodiments, the second lid portion 40 may include a bottom lid tab 48 (FIG. 9), which can be pushed to facilitate separation of the first lid portion 30 from the second lid 40 portion.

Referring to FIGS. 1, 2A-2B and 3, the apparatus 10 may further comprise a knob 50 on the first lid portion 30. The knob 50 is shaped and configured to move the first lid portion 30 relative to the second lid portion 40 so as to form a sealed configuration or a venting configuration. The knob 50 may comprise or be made of a material of metal, plastic or any combination thereof. The knob 50 and the first lid portion 30 may be in a unitary structure molded from a plastic material in a single step. Alternatively, the knob 50 may be made separately and then attached with the first lid portion 30 through any suitable means such as screws, adhesive, or bonding. In some embodiments, the knob 50 is coupled with a center 32 of the first lid portion 30, and is hollow facing inward. Referring to FIGS. 2A-2B, the second lid portion 40 has an upward pin 42 shaped and sized to be inserted into the knob 50 through a hole 52 defined by the first lid portion 30 in the center 32. As illustrated in FIG. 2B, the upward pin 42 can have an outside diameter the same as or smaller than the inside diameter of the hole 52. The upward pin 42 can rotate inside the hole 52.

The container 12 further comprises an outwardly extending rib 16. The rib 16 may be made of the same or different material for the container 12. In some embodiments, the container 12 including the rib 16 are integrally molded from a same elastomer such as silicone. In some embodiments, the rib 16 has higher rigidity and hardness compared to the main body of the container 12.

Referring to FIGS. 1, 2A-2B and 3, the apparatus 10 further comprises at least one (e.g., three) frame clip 18 embedded in the outwardly extending rib 16 and configured to be coupled with the outwardly extending rib 16 and the frame 20 so as to hold and secure the container 12 to the frame 20. For example, the frame clip 18 can be a plastic clip embedded in the rim of the container 12, and having a hook structure, which can be engaged with metal wire of the frame 20. The frame clip 18 secures and holds the container 12 onto the frame 20, when the container 12 faces up or down. In some embodiments, there are three frame clips 18 uniformly distributed through the circumference of the rib 16. When the frame clips 18 are pushed and then move outwardly, or when the frame clips 18 are pulled upwardly, the container 12 is released from the frame 20.

Referring to FIGS. 2A-2B, 3 and 10, the container 12 may further comprise a tab 14 attached to an outside surface of the bottom wall 11. The tab 14 is shaped and sized to be applied to a force and translate to the container 12 so as to push the container 12 inward and pull the container 12 outward, when the apparatus 10 is inverted. The tab 14 may be in a unitary structure together with the container 12. The container 12 having the tab 14 are molded in one step.

The container 12 may be in any suitable shape. For example, the container 12 may be a bucket substantially in a shape of a cylinder or a frustum of cone. The lid, including first lid portion 30 and the second lid portion 40, is substantially circular. In some embodiments, the first lid portion 30 may have a size equal to or smaller than the predetermined size. The second lid portion 40 may also have a size equal to or smaller than the predetermined size. In some embodiments, as illustrated in FIGS. 1, 2A-2B and 4-5, the first lid portion 30 is slightly smaller than the second lid portion 40, and is shaped to have a bottom surface substantially matching with a top surface of the second lid portion 40.

The second lid portion 40 may comprise an edge facing downward shaped and sized to be interlocked with the top edge 17 of the container 12 in some embodiments. The edge of the second lid portion 40 and the top edge 17 of the container 12 may be configured to form a male-female interlocking structure circumferentially in some embodiments.

The at least one venting region 36 of the first lid portion 30 can be in any suitable configuration to provide one or more holes or apertures through the first lid portion 30. For example, referring to FIG. 4, the at least one venting region 36 of the first lid portion 30 may comprise a mesh structure, a grid structure, a net structure, or the like or any combination thereof. The at least one venting region 36 may be arranged in a pattern. For example, in some embodiments, the first lid portion 30 comprises six venting regions 36 radially distributed around the center 32 and throughout the first lid portion 30, as illustrated in FIG. 4. The second lid portion 40 defines six openings 46 radially distributed throughout the second lid portion 40 accordingly.

The first lid portion 30 with venting regions 36 and the second lid portion 40 with openings 46 are described for illustration only. The structures of the first lid portion 30 and the second lid portion 40 can be interchangeable. For example, the first lid portion 30 may have the opening 46 as described and the second lid portion 40 may have the venting regions 36 as described. In some embodiments, the lid includes only a single portion that defines one or more venting regions therethrough. A cover can be pivotally or otherwise moveably coupled to the lid and is adapted to cover and uncover the venting region a desired amount. One of ordinary skill in the art will understand that other means for providing adjustable venting in the cover can be implemented.

In some embodiments, the container 12 is made of an elastomer, which is optionally reinforced. The container 12 may have a smooth or a matted or textured surface. It is preferable that the material for the container 12 has a certain flexibility such that the container 12 is movable when pushed from the bottom 11 with a certain amount of force while the container will substantially maintain its shape when a force below the certain threshold is applied. One of ordinary skill in the art will understand that the amount of force required to invert the container should not be greater than an average adult or child can exert.

The flexibility of the container 12 (compost bucket) can be defined based on its Shore A hardness, which may be in the range of from 20 to 90, measured following ASTM D 2240. The container is made of a material having a Shore A hardness less than or equal to 80 is preferable. Such a material may have a shore A hardness of any suitable ranges, for example, 20-80, 30-80, 40-80, 50-80, 30-70, 40-70, or any other combination.

The container 12 is made of an elastomer, preferably a hydrophobic and mold resistant elastomer in some embodiments. For example, the container 12 is made of a hydrophobic elastomer having a shore A hardness in the range from 20 to 90 for example, 20-70, 30-70, 40-70, 50-70, 30-60, 40-60) in some embodiments. Examples of suitable materials include but are not limited to silicone (including fluorosilicone), polyolefin elastomer, nitrile rubber, ethylene propylene diene monomer (EPDM) rubber, and fluoroelastomer. In some embodiments, the container 12 including the tab 14 is made of silicone.

The lid, including the first lid portion 30, knob 50, and the second lid portion 40, may be made of a plastic or reinforced elastomer.

Suitable materials for the lid, including first (or top) lid portion 30, the second (or bottom) lid portion 40, and knob 50, may be a plastic or reinforced elastomer material having a Shore D hardness in the range from 10-90 (e.g., 30-80, 30-70, 30-60, 40-80, 40-70, 40-60, or any suitable ranges or combinations thereof), measured following ASTM D2240. In some embodiments, such a material may be a reinforced elastomer material having a Shore A hardness in the range from 70-90, measured following ASTM D2240. Such suitable materials may be a hydrophobic and/or mold resistant. Examples of suitable materials include but are not limited to high density polyethylene (HDPE), low density polyethylene (LDPE), polypropylenene (PP), acrylonitrile butadiene styrene (ABS) polymer, other polyolefins, polyethylene terephthalate (PET), polybutylene terephthalate (PBT), polyamide such as nylon, polycarbonate, polysulfone, reinforced elastomer such as silicone or polyolefin elastomer, or any combination thereof. The materials for the lid, including top lid portion 30, the bottom lid portion 40, and knob 50, also have good strength and toughness.

In some embodiments, knob 50 is injected molded with plastics in a single process and then attached with the first lid portion 30 as described.

Frame clip 18 is made of plastic and has higher rigidity and hardness compared to the container. Examples of suitable materials for frame clip 18 include but are not limited to high density polyethylene (HDPE), low density polyethylene (LDPE), polypropylenene (PP), acrylonitrile butadiene styrene (ABS) polymer, other polyolefins, polyethylene terephthalate (PET), polybutylene terephthalate (PBT), polyamide such as nylon, polycarbonate, polysulfone, reinforced elastomer such as silicone or polyolefin elastomer, or any combination thereof. In some embodiment, frame clip 18 is made of nylon, which is molded into silicone for rib 16 and container 12. The frame clips 18 may be in a color different from that of rib 16.

The frame 20 may be made of a metal, a plastics or a combination thereof. In some embodiments, the frame 20 is made of metal wires such as stainless steel wires. In some embodiments, the frame 20 may include an internal structure to at least partially support the bottom 11 of the container 12. The frame may have a polished and smooth surface.

In another aspect, the present disclosure provides a method of making the exemplary apparatus 10 as described. Such a method comprises the steps of providing the container 12, the frame 20, the lid 34, which may include the first lid portion 30 and the second lid portion 40; and assembling the container 12, the frame 20, the first lid portion 30 and the second lid portion 40 to form the apparatus 10.

The container 12 including the bottom tab 14 and the outwardly extending rib 16 may be molded from a same material such as an elastomer or different materials, as described. The container 12 including the bottom tab 14 and the outwardly extending rib 16 may be in a unitary structure. The first lid portion 30 or the second lid portion 40 may be molded from a plastic or reinforced elastomer. The knob 50 and the first lid portion 40 may be in a unitary structure molded in a single step. Alternatively, the knob 50 may be made separately and then attached with the lid through any suitable means such as screws or bonding. The upward pin 42 and the second lid portion 40 may be in a unitary structure molded in a single step.

In the assembling step, the container 12 is coupled onto the frame 20, for example, by pushing the frame clip 18 inward and coupling with the frame 20. The second lid portion 40 is placed onto the top edge 17 of the container 12 so as to cover the container 12. The second lid portion 40 may have an edge to engage or interlock with the top edge 17 of the container 12. The first lid portion 30 is placed onto the second lid portion 40.

In another aspect, the present disclosure also provides a method of using the apparatus 10 as described. The apparatus 10 is placed on a countertop in a kitchen. In such a method, the lid, e.g., the first and the second lid portions 30, 40, is removed from the container 12. Organic waste, such as peeling, vegetables and food leftovers, can be placed into the container 12. The first lid portion 30 is moved relative to the second lid portion 40 to one of the sealed configuration and the venting configuration so as to adjust airflow into the container 12. It is preferable that a certain amount of air may get into the container 12 for compositing, but no odor of decayed waste comes out of the container 12. In some embodiments, the first lid 30 comprises a knob 50 as described. The first lid portion 30 is moved relative to the second lid portion 40 by applying a force to the knob 50 to rotate the first lid portion 30 relative to the second lid portion 40.

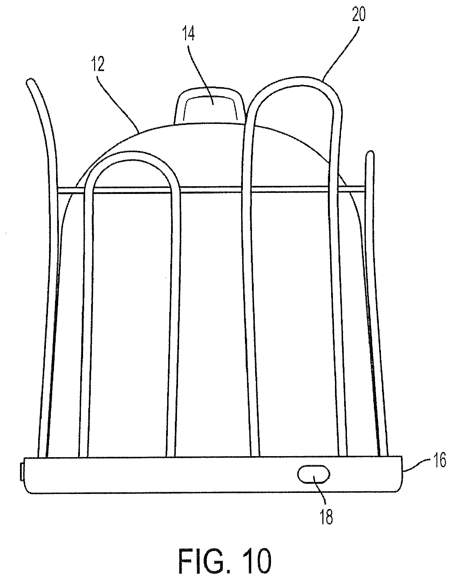

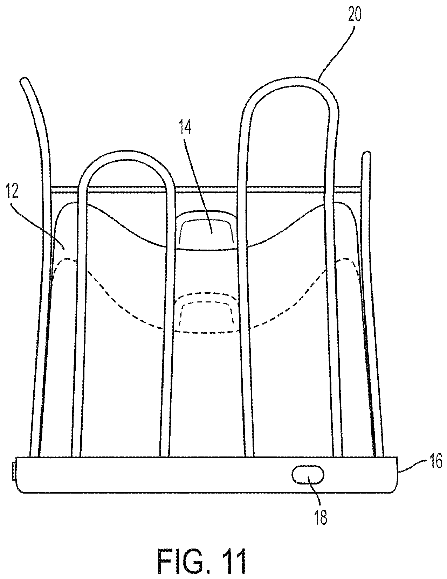

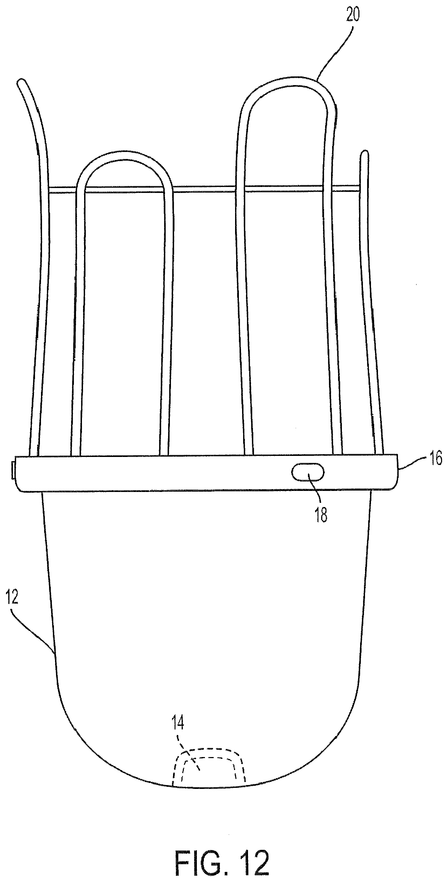

The method of using may further comprise removing the lid (i.e., first and the second lid portions 30, 40) from the container 12, inverting the container 12 (not shown) with the open top at least partially facing down, and pushing the container 12 so as to remove the organic wastes out of the container 12. When the apparatus 10 is inverted, the container 12 remains attached with the frame 20, the container 12 maintains its shape without collapsing. FIGS. 10-12 illustrate an exemplary process for inverting and pushing the apparatus 10. Referring to FIG. 10, the apparatus 10 is turned upside down. In some embodiments, the container 12 comprises a tab 14 as described on an outside surface of the bottom wall. Referring to FIG. 11, the container 12 can be pushed inward by pushing the tab 14 down. In some embodiments, the container 12 can be further pushed fully inside out to be in a configuration as illustrated in FIG. 12. The interior wall of the container 12 is exposed outside. The waster can be discarded, and the container 12 can be then washed.

The organic waste may be kept in the container 12 for a period of time from one day to a month. For example, the organic waste in the container 12 may be discarded out once a week. The tab 14 is pushed to discard the organic wastes inside the container 12. The tab 14 is pulled, i.e., a force is applied onto the tab 14, to translate the container 12 such that the container 12 reverts back to a waste-receiving configuration as shown in FIG. 1 The container 12 can be washed or rinsed with water under a faucet or with water from a garden hose. The container 12 can be also detached from frame 20 and washed in a dishwasher. After being cleaned, the components can be re-assembled for further use.

Although the subject matter has been described in terms of exemplary embodiments, it is not limited thereto. Rather, the appended claims should be construed broadly, to include other variants and embodiments, which may be made by those skilled in the art.

The following numbered paragraphs further describe aspects and embodiments of the invention:
1. An apparatus comprising:
   a container having a bottom wall and a side wall, with an open top and a top edge of a predetermined size defined by the side wall;
   a frame configured to be coupled to and support the container; and
   a lid defining one or more holes that can be adjustably opened and closed.
2. The apparatus of paragraph 1, wherein the container further comprises an outwardly extending rib.
3. The apparatus of paragraph 2, further comprising a frame clip configured to be coupled with the outwardly extending rib and the frame so as to hold the container to the frame.
4. The apparatus of paragraph 1, wherein the container further comprises a tab attached to an outside surface of the bottom wall, and the tab is shaped and sized to push the container inward and pull the container outward.
5. The apparatus of paragraph 1, wherein the container is a bucket substantially in a shape of a cylinder or a frustum of cone, and the lid is substantially circular.
6. The apparatus of paragraph 1, wherein the container is made of a hydrophobic elastomer having a shore A hardness in a range from 20 to 90.
7. The apparatus of paragraph 1, wherein the container is made of a silicone.
8. The apparatus of paragraph 1, wherein the lid comprises an edge shaped and sized to be interlocked with the top edge of the container.
9. The apparatus of paragraph 1, wherein the lid comprises
   a first lid portion having at least one venting region defining a plurality of holes; and
   a second lid portion defining at least one opening,
   wherein the first lid portion is configured to be disposed on the second lid portion, and the second lid portion is configured to be disposed on the top edge to cover the container, and
   the first lid portion is configured to be movable relative to the second lid portion from a sealed configuration to a venting configuration, the at least one venting region and the at least one opening are at least partially overlaps in the venting configuration.
10. The apparatus of paragraph 9, further comprising a knob on the first lid portion, and the knob is shaped and configured to move the first lid relative to the second lid so as to form a sealed configuration or a venting configuration.
11. The apparatus of paragraph 10, wherein the knob comprises a material selected from the group consisting essentially of metal, plastic or combination thereof.
12. The apparatus of paragraph 10, wherein the knob is coupled with a center of the first lid portion, and is hollow facing inward; and the second lid portion has an upward pin shaped and sized to be inserted into the knob.
13. The apparatus of paragraph 9, wherein the first lid portion has a size equal to or smaller than the predetermined size, and the second lid portion has a size equal to or smaller than the predetermined size.
14. The apparatus of paragraph 9, wherein the first lid portion is smaller than the second lid portion, and is shaped to have a bottom surface substantially matching with a top surface of the second lid portion.
15. The apparatus of paragraph 9, wherein the at least one venting region of the first lid portion comprises a mesh structure.
16. The apparatus of paragraph 9, wherein the first lid portion comprises a plurality of venting regions radially distributed throughout the first lid portion, and the second lid portion defines a plurality openings radially distributed throughout the second lid portion.
17. The apparatus of paragraph 1, wherein the lid is made of a plastic or reinforced elastomer, and the frame is made of a metal, a plastic, or a combination thereof.
18. A method of making the apparatus of paragraph 1, comprising
   providing the container, the frame, the lid;
   assembling the container, the frame, the lid to form the apparatus of paragraph 1.
19. The method of paragraph 18, wherein providing the container, the frame, the lid comprises:
   molding the container from an elastomer; and
   molding a first and a second lid portion from a plastics or reinforced elastomer.
20. The method of paragraph 19, wherein the assembling step comprises
   coupling the container onto the frame;
   placing the second lid portion onto the top edge of the container so as to cover the container; and placing the first lid portion onto the second lid.
21. A method of using the apparatus of paragraph 1, comprising:
   placing organic waste into the container, wherein the apparatus is placed on a countertop.
22. The method of paragraph 21, wherein the lid comprises a knob, and the lid is moved relative by applying a force to the knob to rotate the lid.
23. The method of paragraph 21, further comprising:
   removing the lid from the container;
   inverting the container with the open top at least partially facing down;
   pushing the container so as to remove the organic waste out of the container.
24. The method of paragraph 23, wherein the container comprises a tab on an outside surface of the bottom wall, and a force is applied onto the tab to translate the container inward to remove the organic waste and outward back to an original shape.

The subject matter of the invention is set out in the following claims.

## Claims

1. An apparatus comprising:
a container having a bottom wall and a side wall, with an open top and a top edge of a predetermined size defined by the side wall;
a frame configured to be coupled to and support the container; and
a lid defining one or more holes that can be adjustably opened and closed.

2. The apparatus of claim 1, wherein the container further comprises an outwardly extending rib.

3. The apparatus of claim 1 or claim 2, further comprising a frame clip configured to be coupled with the outwardly extending rib and the frame so as to hold the container to the frame.

4. The apparatus of any one of claims 1 to 3, wherein the container further comprises a tab attached to an outside surface of the bottom wall, and the tab is shaped and sized to push the container inward and pull the container outward.

5. The apparatus of any one of claims 1 to 4, wherein the container is a bucket substantially in a shape of a cylinder or a frustum of cone, and the lid is substantially circular,
and/or wherein the container is made of a hydrophobic elastomer having a shore A hardness in a range from 20 to 90,
and/or wherein the container is made of a silicone,
and/or wherein the lid comprises an edge shaped and sized to be interlocked with the top edge of the container.

6. The apparatus of any one of claims 1 to 5, wherein the lid comprises
a first lid portion having at least one venting region defining a plurality of holes; and
a second lid portion defining at least one opening,
wherein the first lid portion is configured to be disposed on the second lid portion, and the second lid portion is configured to be disposed on the top edge to cover the container, and
the first lid portion is configured to be movable relative to the second lid portion from a sealed configuration to a venting configuration, the at least one venting region and the at least one opening are at least partially overlaps in the venting configuration.

7. The apparatus of claim 6, further comprising a knob on the first lid portion, and the knob is shaped and configured to move the first lid relative to the second lid so as to form a sealed configuration or a venting configuration, preferably wherein the knob comprises a material selected from the group consisting essentially of metal, plastic or combination thereof,
and/or wherein the knob is coupled with a center of the first lid portion, and is hollow facing inward; and the second lid portion has an upward pin shaped and sized to be inserted into the knob.

8. The apparatus of claim 6 or claim 7, wherein the first lid portion has a size equal to or smaller than the predetermined size, and the second lid portion has a size equal to or smaller than the predetermined size,
and/or wherein the first lid portion is smaller than the second lid portion, and is shaped to have a bottom surface substantially matching with a top surface of the second lid portion,
and/or wherein the at least one venting region of the first lid portion comprises a mesh structure,
and/or wherein the first lid portion comprises a plurality of venting regions radially distributed throughout the first lid portion, and the second lid portion defines a plurality openings radially distributed throughout the second lid portion.

9. The apparatus of any one of claims 1 to 8, wherein the lid is made of a plastic or reinforced elastomer, and the frame is made of a metal, a plastic, or a combination thereof.

10. A method of making the apparatus of any one of claims 1 to 9, comprising
providing the container, the frame, the lid;
assembling the container, the frame, the lid to form the apparatus of any one of claims 1 to 9.

11. The method of claim 10, wherein providing the container, the frame, the lid comprises:
molding the container from an elastomer; and
molding a first and a second lid portion from a plastics or reinforced elastomer,
and/or wherein the assembling step comprises
coupling the container onto the frame;
placing the second lid portion onto the top edge of the container so as to cover the container; and placing the first lid portion onto the second lid.

12. A method of using the apparatus of any one of claims 1 to 9, comprising:
placing organic waste into the container, wherein the apparatus is placed on a countertop.

13. The method of claim 12, wherein the lid comprises a knob, and the lid is moved relative by applying a force to the knob to rotate the lid.

14. The method of claim 12 or claim 13, further comprising:
removing the lid from the container;
inverting the container with the open top at least partially facing down;
pushing the container so as to remove the organic waste out of the container.

15. The method of any one of claims 12 to 14, wherein the container comprises a tab on an outside surface of the bottom wall, and a force is applied onto the tab to translate the container inward to remove the organic waste and outward back to an original shape.
